(19) Europäisches Patentamt
European Patent Office
Office européen des brevets

(11) **EP 4 517 528 A1**

(12) **EUROPÄISCHE PATENTANMELDUNG**

(43) Veröffentlichungstag:
**05.03.2025 Patentblatt 2025/10**

(21) Anmeldenummer: 23193938.0

(22) Anmeldetag: **29.08.2023**

(51) Internationale Patentklassifikation (IPC):
*G06F 9/50* (2006.01)

(52) Gemeinsame Patentklassifikation (CPC):
**G06F 9/5027;** G06F 2209/501

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder: **Schall, Dr.Daniel**
**2020 Hollabrunn (AT)**

(74) Vertreter: **Siemens Patent Attorneys**
**Postfach 22 16 34**
**80506 München (DE)**

(54) **VERFAHREN UND VORRICHTUNG ZUM ZUTEILEN EINEM EINGABEDATENSATZ**

(57) Die Erfindung betrifft ein Verfahren zum Zuteilen von zumindest einem Eingabedatensatz (2), in einem modularen Rechnernetzwerk (3), welches wenigstens ein erstes Rechenmodul (4) und ein zweites Rechenmodul (5) aufweist, wobei das erste Rechenmodul (4) ein denen jeweils ein Ressourcenwert für eine digitale Ressource zugeordnet ist, wobei das erste Rechenmodul (4) einer ersten Plattform (7) zugeordnet ist, wobei das zweite Rechenmodul (5) einer, von der ersten Plattform (7) verschiedenen, zweiten Plattform (8) zugeordnet ist, wobei der Eingabedatensatz (2) eine Ressourcenanfrage mit einem Bedarfswert aufweist.

Bei einem Verfahren, bei dem flexibel auf unterschiedliche Anforderungen reagiert werden kann, werden mittels einer Steuereinheit (10) die folgenden Schritte ausgeführt:

a) Zugreifen auf den Eingabedatensatz (2) und Einlesen des Eingabedatensatzes (2),

b) Abrufen des Ressourcenwertes von jedem Rechenmodul (4, 5), das Teil des modularen Rechnernetzwerks (3) ist wobei der Ressourcenwert einen verfügbaren Anteil der digitalen Ressource des jeweiligen Rechenmoduls (4, 5) repräsentiert,

c) Vergleichen des Bedarfswerts mit zumindest einem der abgerufenen Ressourcenwerte,

d) Zuteilen des Eingabedatensatzes (2) zu einem Rechenmodul (4, 5) in Abhängigkeit des Vergleichs des Bedarfswertes mit dem abgerufenen Ressourcenwert.

EP 4 517 528 A1

**Beschreibung**

Die Erfindung betrifft ein Verfahren zum Zuteilen von zumindest einem Eingabedatensatz, in einem lokalen modularen Rechnernetzwerk, welches wenigstens ein erstes Rechenmodul und ein zweites Rechenmodul aufweist, wobei das erste Rechenmodul ein denen jeweils ein Ressourcenwert für eine digitale Ressource zugeordnet ist, wobei das erste Rechenmodul einer ersten Plattform zugeordnet ist, wobei das zweite Rechenmodul einer zweiten, von der ersten Plattform verschiedenen, Plattform zugeordnet ist, wobei der Eingabedatensatz eine Ressourcenanfrage mit einem Bedarfswert aufweist.

Daneben betrifft die Erfindung eine Vorrichtung zum Zuteilen von zumindest einem Eingabedatensatz, in einem lokalen modularen Rechnernetzwerk, welches wenigstens ein erstes Rechenmodul und ein zweites Rechenmodul aufweist, wobei das erste Rechenmodul ein denen jeweils ein Ressourcenwert für eine digitale Ressource zugeordnet ist, wobei das erste Rechenmodul einer ersten Plattform zugeordnet ist, wobei das zweite Rechenmodul einer zweiten, von der ersten Plattform verschiedenen, Plattform zugeordnet ist, wobei der Eingabedatensatz eine Ressourcenanfrage mit einem Bedarfswert aufweist.

Eine digitale Ressource kann beispielsweise eine Rechenkapazität oder Speicherkapazität sein, welche je nach Anwendung lokal oder durch einen Fernzugriff in einer Cloud verfügbar sein kann. Es gibt unterschiedliche Cloud-Typen, welche beispielsweise nach Anwendung, Daten-Abruf oder Entfernung kategorisiert sein können.

Eine Cloud ermöglicht Maschinen und Menschen den ortsungebundenen Zugriff auf Daten. Die Cloud bietet eine gemeinsame Nutzung verfügbarer Rechen- und Speicherressourcen unter den Benutzern, die entweder Menschen, Maschinen oder sogar beides sein können, auf Abruf (on-demand). Diese Ressourcen befinden sich üblicherweise in räumlich nicht bekannten Datenzentren, auf die über IP-basierte Technologien zugegriffen wird. Dies basiert im Allgemeinen auf einem Best-Effort-Service, welcher in der Regel keine Echtzeitfähigkeit benötigt.

Eine Regional Edge Cloud wird stellt Rechenkapazität zur Verfügung, die nicht on-site ist. Diese kann über eine dedizierte (kontrollierte) Verbindung an die Feldebene verfügen. Häufig handelt es sich bei der Regional Edge Cloud um ein Rechenzentrum eines lokalen Anbieters. Sie kann mehrere Industrial Edge Clouds an unterschiedlichen physischen Standorten miteinander, oder mit einer Cloud; verbinden. Regionale Edge Clouds verfügen in der Regel über mehr Rechenleistung als lokale Industrial Edge Clouds. Die Regional Edge Cloud ist eine optionale Ebene (Tier), die eine niedrigere Latenz als die Cloud hat und je nach Anbindung zwischen Best-Effort-Service und weicher Echtzeitfähigkeit zur Verfügung stellen kann. Zudem bietet sich der Vorteil einer erhöhten Verfügbarkeit und dedizierten Internetanbindung.

Eine Industrial Edge Cloud ist eine private Cloud, mit direktem oder indirektem Zugriff auf die Feldebene. Die Industrial Edge Cloud stellt eine skalierbare, unter Umständen ausfallsichere und verteilte Rechenleistung zur Verfügung, die von einem oder mehreren Edge Nodes bereitgestellt wird, um Berechnungen an der Edge durchzuführen. Die Kommunikation in der Industrial Edge Cloud kann in Echtzeit oder Nicht-Echt-zeit sein. Der Ausfall einzelner Edge Nodes kann ggf. kompensiert werden. Die Funktionalität der Industrial Edge Cloud ist auch ohne Internetverbindung gewährleistet.

Ein Edge Node ist ein Gerät, das Schnittstellen bereitstellt, um direkt oder indirekt (durch andere Edge Nodes) mit einem oder mehreren Feldgeräten verbunden zu werden und dadurch das Computing in dessen Nähe ermöglicht. Ein Edge Node ist ein computingfähiges Gerät und kann zum Beispiel eine SPS, ein Raspberry Pi, ein Industrie-PC, ein Server oder ein Computing Cluster sein. Es kann auch zum Filtern oder vorverarbeiten der Daten verwendet werden, um sie später in die Cloud oder auf leistungsfähigere Computer zu übertragen. Es kann je nach Anwendungsfall eine Echtzeit- oder Nicht-Echtzeit-Verbindung mit den Geräten haben. Die Echtzeitfähigkeit kann zudem zwischen weicher Echtzeit und harter Echtzeit variieren. Ein Ausfall in harten Echtzeitanwendungen ist meist fatal, während in weichen Echtzeitanwendungen der Ausfall bis zu einem gewissen Punkt toleriert werden kann.

Ein lokales Netzwerk ist ein Netz, welches in der Regel innerhalb einer abgegrenzten Region verschiedene Geräte verbindet. In diesem Kontext sind mit dem Begriff "Geräte" Rechenmodule gemeint. Dabei arbeitet das Netz häufig ohne IP-Routing, beispielsweise nur mit Ethernet. Das lokale Netz ist durch die Anzahl der daran angeschlossenen Geräte begrenzt. Zwar gibt es keinen allgemein anerkannten Grenzwert für die Abgrenzung eines lokalen Netzes. Im industriellen Kontext sind häufig wenige hundert Rechenmodule an ein lokales Netzwerk angeschlossen. Diese Geräte sind oft lokal angeordnet, wodurch sich ebenfalls eine räumliche Begrenzung ergeben kann. Oft ist ein lokales Netzwerk auf ein Firmengelände oder einen Bürokomplex beschränkt.

So kann beispielsweise die IT-Infrastruktur auf einem Firmengelände zu einem lokalen, modularen Rechnernetzwerk zusammen- gefasst sein. Bei größeren Firmen kann ein solches Firmengelände durchaus eine Ausdehnung von wenigen Kilometern erreichen. Ein lokales, modulares Rechnernetzwerk kann sich jedoch nicht über mehrere Kontinente erstrecken. Zwar könnte eine Firma eine Niederlassung in Rom und eine weitere Niederlassung in Tokio haben, jedoch würde das lokale, modulare Rechnernetzwerk sich auf jeweils einen Standort beschränken. Zwar mag eine Verbindung von zwei lokalen modularen Rechnernetzwerken möglich sein, dies bedeutet jedoch nicht, dass daraus eine einzige Edge-Cloud hervorgeht.

Die bisher eingesetzten lokalen Netzwerke setzen zur Realisierung homogene Rechenmodule ein. Homogene Rechenmodule sind untereinander ähnlich und weisen Übereinstimmungen bei einer oder mehreren charakterisierenden Eigenschaften auf. Oft werden solche Netzwerke als Komplettpaket von einem Anbieter vertrieben, was zum Beispiel dazu führt, dass alle Rechenmodule dasselbe Betriebssystem aufweisen können. Im Gegensatz dazu ermöglicht die vorliegende Erfindung auch die Bildung eines lokalen, modularen Rechnernetzwerkes, welches heterogene Komponenten aufweisen kann. Darüber hinaus ist ein Rechnernetzwerk gemäß der vorliegenden Erfindung deutlich flexibler anpassbar als ein stationäres Rechnernetzwerk. Zudem treten bei bisherigen Edge-Cloud-Lösungen einige Defizite auf.

Unterschiedliche Anwendungsfälle oder verschiedene Einsatzorte bedürfen eines noch flexibleren Konzeptes mit der Fähigkeit, sich zumindest teilweise den Anforderungen anzupassen. Bei einem stationären Rechnernetzwerk ist dies erstmals nicht gegeben. Anwendungsfälle, welche temporär auftreten, können eine temporäre Installation oder dynamische Infrastrukturen benötigen. Daher ist ein hohes Maß an Nutzerfreundlichkeit, im Idealfall ein installationsloser Einsatz von Software und weiteren Komponenten sinnvoll. Nötige Anpassungen am lokalen, modularen Rechnernetzwerk sollten im Idealfall auch von einem Laien und nicht nur von Netzwerk-Experten möglich sein. Es sind einige Szenarien vorstellbar, bei denen eine Offline- Ausführung erwünscht ist. Auch in diesen Fällen sollten bestimmte Rechenmodule, die Teil des lokalen, modularen Rechnernetzwerkes sind, ihre Arbeit fortsetzen können. Die Arbeit der Rechenmodule soll also nicht von einer Onlineverbindung abhängig sein. In vielen Fällen teilen sich mehrere Teilnehmer ein Netzwerk und die dazugehörige IT-Infrastruktur. Diese Teilnehmer können Menschen, aber auch die Rechenmodule als Teil des lokalen, modularen Rechnernetzwerkes sein. Bestimmte Anforderungen bedürfen einer erhöhten Rechenkapazität. Das lokale, modulare Rechnernetzwerk sollte derart flexibel ausgestaltet sein, um auf rechenintensive Anfragen adäquat reagieren zu können.

Hinsichtlich der Flexibilität kann es auch richtig sein, dass das lokale, modulare Rechnernetzwerk auch Geräte und Software unterschiedlicher Hersteller unterstützt.

Die vorgenannten Defizite zeigen, dass gegenwärtig vorhandene lokale, modulare Rechnernetzwerke nicht oder nur unzureichend auf verschiedene Anwendungsfälle beziehungsweise Anforderungen reagieren können.

Die Aufgabe der Erfindung besteht daher darin, ein Verfahren zum Zuteilen eines Eingabedatensatzes sowie eine Vorrichtung anzugeben, bei denen flexibel auf unterschiedliche Anforderungen reagiert werden kann.

Diese Aufgabe ist zunächst durch die Merkmale des Patentanspruchs 1 dadurch gelöst, dass mittels einer Steuereinheit die folgenden Verfahrensschritte ausgeführt werden: Zugreifen auf den Eingabedatensatz und Einlesen des Eingabedatensatzes; Abrufen des Ressourcenwertes von jedem Rechenmodul, das Teil des modularen Netzwerks ist wobei der Ressourcenwert einen verfügbaren Anteil der digitalen Ressource des jeweiligen Rechenmoduls repräsentiert; Vergleichen des Bedarfswerts mit zumindest einem der abgerufenen Ressourcenwerte; Zuteilen des Eingabedatensatzes zu einem Rechenmodul in Abhängigkeit des Vergleichs des Bedarfswertes mit dem abgerufenen Ressourcenwert.

Das Zuteilen eines Datensatzes zu einem Rechenmodul impliziert die Verarbeitung bzw. die Ausführung des Datensatzes durch das Rechenmodul. Vorzugsweise wird mit der Ausführung des Datensatzes ein technisches Gerät betrieben. Im Betrieb können folglich Daten dazu verwendet werden, ein Gerät mit einer Steuervorrichtung anzusteuern oder Daten von einem Gerät auszulesen und entsprechend auszuwerten, wie beispielsweise für eine Rekonstruktion von Messdaten. Dem erfindungsgemäßen Verfahren werden also Betriebsdaten zum Betrieb des technischen Geräts bereitgestellt bzw. werden Betriebsdaten von einem entsprechenden Sensormittel erfasst.

Bei einer ersten Ausgestaltung des erfindungsgemäßen Verfahrens ist vorgesehen, dass dem Eingabedatensatz Aufgaben zugeordnet sind, insbesondere Datenvorverarbeitung und/oder Modelltraining. Mindestens eine Aufgabe ist mit dem Eingabedatensatz verbunden. Einem Eingabedatensatz können eine oder mehrere Aufgaben zugeordnet sein. Eine Aufgabe unterliegt Beschränkungen wie Zugriffsverzögerung und Recheneffizienz, zum Beispiel die Verfügbarkeit einer ausreichenden CPU-Leistung, eines Speichers oder einer GPU-Leistung. Durch Zuteilung der Aufgaben, können Präferenzen über die Verarbeitung getroffen werden, sodass eine jeweilige Plattform möglicherweise besser für die Verarbeitung geeignet ist.

Bei einer weiteren Ausgestaltung des erfindungsgemäßen Verfahrens ist vorgesehen, dass die erste Plattform auf Edge Computing basiert und dass die zweite Plattform auf Cloud Computing basiert. Eine Plattform besitzt bestimmte Fähigkeiten wie Speicherung, Kommunikationseffizienz, Langzeitverfügbarkeit, Zugriffsverzögerung und Recheneffizienz. Dabei hat im allgemeinen eine Cloud hohe Lagerkosten, hohe Kommunikationskosten, eine hohe Zugriffsverzögerung, dafür aber niedrige Kosten für die langfristige (Daten-)Verfügbarkeit eine hohe Zugriffsverzögerung. Edge hingegen verfügt über niedrige Lagerkosten, niedrige Kommunikationskosten und hat eine geringe Zugriffsverzögerung. Dafür sind die Kosten für die langfristige (Daten-)Verfügbarkeit höher, als bei einer Cloud. Diese Vor- und Nachteile können bei der Zuteilung des Eingabedatensatzes berücksichtigt werden, um eine optimale Zuteilung zu begünstigen.

Ferner kann bei einer weiteren Ausgestaltung des erfindungsgemäßen Verfahrens mindestens ein drittes Rechenmodul in dem modularen Rechnernetzwerk vorgesehen sein, wobei dem dritten Rechenmodul eine dritte Plattform zugeordnet ist und wobei die dritte Plattform auf Fog Computing basiert. Fog hat mittlere Kosten für Speicherung, Kommunikation, langfristige (Daten-)Verfügbarkeit und eine mittlere Zugriffsverzögerung, im Vergleich zu Cloud und Edge. Durch das Einbringen von Fog Computing kann das Netzwerk flexibler gestaltet werden, wodurch eine effiziente Zuteilung des Eingabedatensatzes weiter verbessert wird.

Ferner kann bei einer weiteren Ausgestaltung des erfindungsgemäßen Verfahrens vorgesehen sein, dass der Eingabedatensatz Bilddaten und/oder Zeitreihen umfasst. Diese Daten können beispielsweise besonders gut für das Anlernen von neuronalen Netzwerken verwendet werden. Da diese Daten aber eine bestimmte Größe haben und ihnen bestimmte Präferenzen bezüglich der Verarbeitung zugeordnet sind, die Einfluss auf die Kosten für Speicherung, Kommunikation und langfristige Verfügbarkeit haben, können sie entsprechend dem Verfahren effizient den entsprechenden Rechenmodulen zugeteilt werden.

Bei einer besonders vorteilhaften Ausgestaltung des erfindungsgemäßen Verfahrens ist vorgesehen, dass für die Zuteilung durch die Steuereinheit eine Zuteilungseffizienz berechnet wird, auf Basis der Gleichung:

$$PE(d) = wd1*C1(dev1) + wd2*C2(dev1) + wd3*C3(dev1),$$

wobei d der Eingabedatensatz ist, wobei C1, C2 und C3 den Ressourcenwerten entsprechen und wobei w einer Gewichtung entspricht. Die Gewichtung kann entsprechend an den Anforderungen der Aufgaben ausgerichtet sein. Vorzugsweise wird durch die Gewichtung nach Speicherung, Kommunikation und langfristige Verfügbarkeit eine optimale Verteilung des Eingabedatensatzes begünstigt, da erkennbar ist, für welches Rechenmodul der Datensatz am geeignetsten ist.

Zusätzlich oder alternativ kann bei einer weiteren bevorzugten Ausgestaltung des erfindungsgemäßen Verfahrens vorgesehen sein, dass für die Zuteilung durch die Steuereinheit eine Aufgabeneffizienz der Rechenmodule für den entsprechenden Eingabedatensatz berechnet wird, auf Basis der Gleichung:

$$TE(t; dt) = wt1*CT1(D(dt)) + wd2*CT2(D(dt)),$$

wobei t einer Aufgabe entspricht, wobei d einem Datensatz entspricht, wobei die Funktionen CT1 und CT2 die Ressourcenwerte unter einer Gewichtung w bestimmen. Eine zusätzliche Bestimmung der Aufgabeneffizienz hilft dabei, die Effizienz der Platzierung von Datensätzen und die Effizienz der Aufgaben zu optimieren.

Bei einer besonders bevorzugten Ausgestaltung der Erfindung ist vorgesehen, dass die Zuteilungseffizienz und die Aufgabeneffizienz derart durch die Steuereinheit berechnet werden, dass eine Maximierung der Summe der Zuteilungseffizienz und der Aufgabeneffizienz erreicht wird. Auf diese Weise kann gleichzeitig die Effizienz der Platzierung von Datensätzen und die Effizienz der Erledigung der Aufgaben optimiert werden.

Die vorgenannte Aufgabe wird außerdem gelöst von einer Vorrichtung zum Zuteilen von zumindest einem Eingabedatensatz, in einem modularen Rechnernetzwerk, welches wenigstens ein erstes Rechenmodul und ein zweites Rechenmodul aufweist, wobei das erste Rechenmodul ein denen jeweils ein Ressourcenwert für eine digitale Ressource zugeordnet ist, wobei das erste Rechenmodul einer ersten Plattform zugeordnet ist, wobei das zweite Rechenmodul einer zweiten, von der ersten Plattform verschiedenen, Plattform zugeordnet ist, wobei der Eingabedatensatz eine Ressourcenanfrage mit einem Bedarfswert aufweist, wobei eine Steuereinheit dazu ausgestaltet ist: Auf den Eingabedatensatz zuzugreifen und den Eingabedatensatz einzulesen; den Ressourcenwert von jedem Rechenmodul, das Teil des modularen Netzwerks ist abzurufen wobei der Ressourcenwert einen verfügbaren Anteil der digitalen Ressource des jeweiligen Rechenmoduls repräsentiert; den Bedarfswerts mit zumindest einem der abgerufenen Ressourcenwerte zu ermitteln; und den Eingabedatensatz zu einem Rechenmodul in Abhängigkeit des Vergleichs des Bedarfswertes mit dem abgerufenen Ressourcenwert zuzuteilen.

Elektronische oder elektrische Geräte im Rahmen der Vorrichtung und/oder andere relevante Geräte oder Komponenten gemäß den hier beschriebenen Ausführungsformen der vorliegenden Erfindung können unter Verwendung jeder geeigneten Hardware, Firmware (z. B. einer anwendungsspezifischen integrierten Schaltung), Software oder einer Kombination aus Software, Firmware und Hardware implementiert werden. Beispielsweise können die verschiedenen Komponenten dieser Geräte auf einem integrierten Schaltkreis (IC) oder auf separaten IC-Chips untergebracht sein. Darüber hinaus können die verschiedenen Komponenten dieser Geräte auf einer flexiblen gedruckten Schaltungsfolie, einem Tape-Carrier-Package (TCP), einer Leiterplatte (PCB) oder auf einem einzigen Substrat implementiert sein. Darüber hinaus können die verschiedenen Komponenten dieser Vorrichtungen ein Prozess oder Thread sein, der auf einem oder mehreren Prozessoren in einem oder mehreren Computergeräten läuft, Computerprogrammanweisungen ausführt und mit anderen Systemkomponenten interagiert, um die verschiedenen hier beschriebenen Funktionen auszuführen. Die Computerprogrammanweisungen sind in einem Speicher gespeichert, der in einem Computergerät unter Verwendung eines Standardspeichers, wie z. B. eines Arbeitsspeichers (RAM), implementiert werden kann. Die Computerprogrammanweisungen können auch in anderen nicht-übertragbaren, computerlesbaren Medien gespeichert werden, wie z. B. auf einer CD-ROM, einem Flash-Laufwerk oder ähnlichem. Eine fachkundige Person sollte auch erkennen, dass die Funktionalität verschiedener Computergeräte kombiniert oder in ein einziges Computergerät integriert werden kann, oder dass die Funktionalität eines bestimmten Computergeräts auf ein oder mehrere andere Computergeräte verteilt werden kann, ohne vom Anwendungsbereich der beispielhaften Ausführungsformen der vorliegenden Erfindung abzuweichen.

Bei einer ersten Ausgestaltung der erfindungsgemäßen Vorrichtung ist vorgesehen, dass durch die Steuereinheit dazu eingerichtet und ausgestaltet ist, ein erfindungsgemäßes Verfahren durchzuführen. Die obigen Ausführungen betreffend das erfindungsgemäße Verfahren gelten entsprechend auch für die erfindungsgemäße Vorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigt:

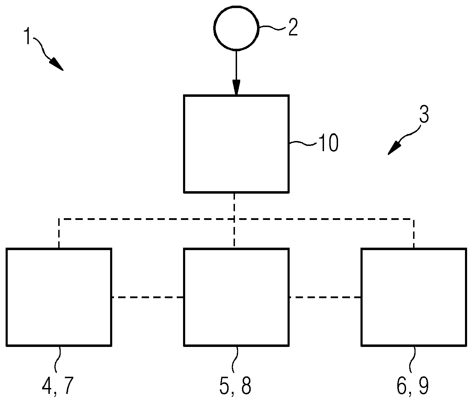

Figur 1     einen schematischen Aufbau eines Rechnernetzwerkes, bei dem ein Eingabedatensatz optimiert innerhalb des Netzwerks zugeteilt wird.

In der Figur 1 ist eine Vorrichtung 1 zum Zuteilen von zumindest einem Eingabedatensatz 2, in einem modularen Rechnernetzwerk 3, welches ein erstes Rechenmodul 4, ein zweites Rechenmodul 5 und ein drittes Rechenmodul 6 aufweist, gezeigt. Den Rechenmodulen 4, 5, 6 ist jeweils ein Ressourcenwert für eine digitale Ressource zugeordnet. Darüber hinaus ist das erste Rechenmodul 4 einer ersten Plattform 7, das zweite Rechenmodul 5 einer zweiten Plattform 8 und das dritte Rechenmodul 6 einer dritten Plattform 9 zugeordnet.

Die Plattformen 7, 8, 9 sind voneinander verschieden. Der Eingabedatensatz 2 weist eine Ressourcenanfrage mit einem Bedarfswert auf. Mittels einer Steuereinheit 10 wird der Eingabedatensatz 2 eingelesen. Ferner wird der Ressourcenwert von jedem Rechenmodul 4, 5, 6 abgerufen, wobei der Ressourcenwert einen verfügbaren Anteil der digitalen Ressource des jeweiligen Rechenmoduls 4, 5 ,6 repräsentiert. Der Bedarfswert wird mit den abgerufenen Ressourcenwerten verglichen und der Eingabedatensatz in Abhängigkeit des Vergleichs des Bedarfswertes mit den Ressourcenwerten zugeteilt.

Bei den Plattformen 7, 8, 9 handelt es sich dabei bei der ersten Plattform 7 um Cloud Computing, bei der zweiten Plattform 8 um Edge Computing und bei der dritten Plattform 9 um Fog Computing. Jede dieser Plattformen hat in Bezug auf Kosten, Speicherung und Datenverfügbarkeit unterschiedliche Vorteile. Der Bedarfswert ergibt sich dadurch, dass verschiedene Eingabedatensätze 1 unterschiedliche Ressourcen benötigen, die an Aufgaben geknüpft sind. Ziel ist es nun, die Eingabedatensätze 1 möglichst effizient auf die Rechenmodule 4, 5, 6 zu verteilen, sodass die Zuteilung in Bezug auf eine optimale Platzierungseffizienz und einer optimalen Aufgabeneffizient gleichzeitig erfolgt.

Dabei wird eine Platzierungseffizienz mit durch die Formel:

$$PE(d) = w_{d1} * C1(dev_1) + w_{d2} * C2(dev_1) + w_{d3} * C3(dev_1)$$

berechnet. Dev steht für die Menge der möglichen Plattformoptionen, Edge, Fog und Cloud. Die Funktionen C1(), C2(), C3() ermitteln die jeweiligen Fähigkeitsbewertungen für das gegebene Gerät devx. Die entsprechenden Variablen können Tabelle 1 entnommen werden.

**Tabelle 1**

| Dataset | Device ID | Size | Storage | Comm. | Long Term | Placeme nt Eff. |
|---------|-----------|------|---------|-------|-----------|-----------------|
| 1 | $dev_1$ | S1 | $w_{11}$ | $w_{12}$ | $w_{13}$ | PE (1) |
| 2 | $dev_2$ | S2 | $w_{21}$ | $w_{22}$ | $w_{23}$ | PE(2) |
| 3 | $dev_3$ | S3 | $w_{31}$ | $w_{32}$ | $w_{33}$ | PE(3) |

Weiter wird eine Aufgabeneffizienz TE(t; d) für eine bestimmte Aufgabe t wie folgt berechnet:

$$TE(t; d_t) = w_{t1} * CT1(D(d_t)) + w_{d2} * CT2(D(d_t))$$

Die Funktionen CT1() und CT2() ermitteln die jeweiligen Fähigkeitswerte des gegebenen Geräts D(d) anhand des gegebenen Eingabedatensatzes d.

**Tabelle 2**

| Task | Dataset | Access Delay | Comp. Eff. | Device ID | Task Eff. |
|------|---------|--------------|------------|-----------|-----------|
| 1 | $d_1$ | $w_{11}$ | $w_{12}$ | $D(d_1)$ | TE(1) |

5

(fortgesetzt)

| Task | Dataset | Access Delay | Comp. Eff. | Device ID | Task Eff. |
|------|---------|--------------|------------|-----------|-----------|
| 2 | $d_2$ | $w_{21}$ | $w_{22}$ | $D(d_2)$ | TE(2) |
| 3 | $d_3$ | $w_{31}$ | $w_{32}$ | $D(d_3)$ | TE(3) |
| 4 | $d_4$ | $w_{41}$ | $w_{42}$ | $D(d_4)$ | TE(4) |

Das übergeordnete Ziel ist die Maximierung der Ziel-PE und TE:

$$\max\left(\sum_d PE(d) + \sum_t TE(t)\right)$$

Numerisches Beispiel:

Das Szenario das aus Tabellen 1 und 2 und den vorgenannten Berechnungsformeln übertragen wurde, zeigt 3 Eingabedatensätze von unterschiedlicher Größe. Die Device IDs in Tabelle 3 sind die Variablen, die durch den Optimierungsalgorithmus geändert werden.

**Tabelle 3**

| Dataset | Device ID | Size | Storage | Comm. | Long Term | PE |
|---------|-----------|------|---------|-------|-----------|-----|
| 1 | 3 | 30 | 1 | 0 | 2 | 7 |
| 2 | 1 | 20 | 1 | 2 | 0 | 9 |
| 3 | 1 | 40 | 2 | 1 | 0 | 9 |

**Tabelle 4**

| Task | Dataset | Access Delay | Comp. Eff. | Device ID | Task Eff. |
|------|---------|--------------|------------|-----------|-----------|
| 1 | 1 | 2 | 1 | 3 | 5 |
| 2 | 1 | 1 | 2 | 3 | 7 |
| 3 | 2 | 2 | 1 | 1 | 7 |
| 4 | 3 | 2 | 1 | 1 | 7 |

**Tabelle 5**

| Dev | Memory | Alloc. Mem | Num. Data | Storage | Comm. | Long Term | Accness Delay | Comp. Eff | |
|-----|--------|------------|-----------|---------|-------|-----------|---------------|-----------|------|
| 1 | 200 | 61 | 2 | 3 | 3 | 1 | 3 | 1 | Edge |
| 2 | 500 | 1 | 0 | 2 | 2 | 2 | 2 | 2 | Fog |
| 3 | 1000 | 0 | 1 | 1 | 1 | 3 | 1 | 3 | Cloud |

Für jeden Datensatz müssen die Präferenzen [0, 1, 2] für Speicherung, Kommunikation und langfristige Verfügbarkeit ausgewählt werden. Der Benutzer muss einer Präferenz einen Wert zuweisen. Mit '0' wird ein Kriterium gestrichen. Ein höherer Wert bedeutet eine höhere Wichtigkeit.

Für den Datensatz 1 hat die Langzeitverfügbarkeit Priorität (Gewicht 2). Kommunikation ist nicht wichtig. Bei den Aufgaben, die mit 1 verbunden sind (1 und 2), gibt es widersprüchliche Einschränkungen. Aufgabe 1 hat eine höhere Priorität bei der Zugriffsverzögerung, während Aufgabe 2 eine höhere Priorität bei der Berechnungseffizienz hat. In diesem Fall wird entschieden, den Datensatz in die Cloud zu verschieben (siehe Device-ID = 3, die das Gerät "Cloud" ist).

Bei Aufgabe 2 haben die Kommunikationskosten Vorrang (Gewicht 2). Die Langzeitverfügbarkeit ist nicht von Bedeutung. Bei der zugehörigen Aufgabe 3 hat die Zugriffsverzögerung (Gewichtung 2) Priorität. Daher wird entschieden, den Datensatz an den Rand zu verschieben (siehe Geräte-ID = 1, das ist das Gerät "Edge").

Für den letzten Datensatz 3 haben die Speicherkosten (Gewichtung 2) Priorität. Die zugehörige Aufgabe 4 hat die Priorität Zugriffsverzögerung (Gewichtung 2). Daher wird entschieden, den Datensatz an den Rand zu verschieben (siehe Geräte-ID = 1, das ist das Gerät "Edge").

Die Tabelle 5 mit den Geräten (Dev) 1, 2 und 3 zeigt die Fähigkeiten des Geräts, einschließlich des zugewiesenen Speichers und der Anzahl der auf dem Gerät gespeicherten Datensätze. Höhere Fähigkeitswerte sind besser.

Zusätzliche Einschränkungen bei der Optimierung sind die Gesamtspeicherkapazität auf Edge, Fog oder Cloud sowie die Kommunikationskapazität.

Das Gesamtziel für PE und TE (berechnet nach der obigen Gleichung), das maximiert werden soll, ist in diesem speziellen Szenario die Zahl 51.

Auf diese Weise kann eine flexible Zuteilung der Eingabedatensätze unter gleichzeitiger Berücksichtigung der Aufgabeneffizienz erfolgen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1    Vorrichtung
2    Eingabedatensatz
3    Rechnernetzwerk
4    Erstes Rechenmodul
5    Zweites Rechenmodul
6    Drittes Rechenmodul
7    Erste Plattform
8    Zweite Plattform
9    Dritte Plattform
10   Steuereinheit

**Patentansprüche**

1.  Verfahren zum Zuteilen von zumindest einem Eingabedatensatz (2),

    in einem modularen Rechnernetzwerk (3), welches wenigstens ein erstes Rechenmodul (4) und ein zweites Rechenmodul (5) aufweist,
    wobei das erste Rechenmodul (4) ein
    denen jeweils ein Ressourcenwert für eine digitale Ressource zugeordnet ist,
    wobei das erste Rechenmodul (4) einer ersten Plattform (7) zugeordnet ist,
    wobei das zweite Rechenmodul (5) einer, von der ersten Plattform (7) verschiedenen, zweiten Plattform (8) zugeordnet ist,
    wobei der Eingabedatensatz (2) eine Ressourcenanfrage mit einem Bedarfswert aufweist,
    wobei mittels einer Steuereinheit (10) die folgenden Verfahrensschritte ausgeführt werden:

    a) Zugreifen auf den Eingabedatensatz (2) und Einlesen des Eingabedatensatzes (2),
    b) Abrufen des Ressourcenwertes von jedem Rechenmodul (4, 5), das Teil des modularen Rechnernetzwerks (3) ist wobei der Ressourcenwert einen verfügbaren Anteil der digitalen Ressource des jeweiligen Rechenmoduls (4, 5) repräsentiert,
    c) Vergleichen des Bedarfswerts mit zumindest einem der abgerufenen Ressourcenwerte,
    d) Zuteilen des Eingabedatensatzes (2) zu einem Rechenmodul (4, 5) in Abhängigkeit des Vergleichs des Bedarfswertes mit dem abgerufenen Ressourcenwert.

2.  Verfahren nach Anspruch 1, **dadurch gekennzeichnet, dass** dem Eingabedatensatz (2) Aufgaben zugeordnet sind, insbesondere Datenvorverarbeitung und/oder Modelltraining.

3.  Verfahren nach Anspruch 1 oder 2, **dadurch gekennzeichnet, dass** die erste Plattform (7) auf Edge Computing basiert und dass die zweite Plattform (8) auf Cloud Computing basiert.

4.  Verfahren nach einem der Ansprüche 1 bis 3, **dadurch gekennzeichnet, dass** mindestens ein drittes Rechenmodul (6) in dem modularen Rechnernetzwerk (3) vorgesehen ist, dass dem dritten Rechenmodul (6) eine dritte Plattform (9) zugeordnet ist und dass die dritte Plattform (9) auf Fog Computing basiert.

5. Verfahren nach einem der Ansprüche 1 bis 4, **dadurch gekennzeichnet, dass** der Eingabedatensatz (2) Bilddaten und/oder Zeitreihen umfasst.

6. Verfahren nach einem der Ansprüche 1 bis 5, **dadurch gekennzeichnet, dass** für die Zuteilung durch die Steuereinheit (10) eine Zuteilungseffizienz berechnet wird, auf Basis der Gleichung:

$$PE(d) = wd1*C1(dev1) + wd2*C2(dev1) + wd3*C3(dev1),$$

wobei d der Eingabedatensatz (2) ist, wobei C1, C2 und C3 den Ressourcenwerten entsprechen und wobei w einer Gewichtung entspricht.

7. Verfahren nach einem der Ansprüche 1 bis 6, **dadurch gekennzeichnet, dass** für die Zuteilung durch die Steuereinheit (10) eine Aufgabeneffizienz der Rechenmodule für den entsprechenden Eingabedatensatz (2) berechnet wird, auf Basis der Gleichung:

$$TE(t; dt) = wt1*CT1(D(dt)) + wd2*CT2(D(dt)),$$

wobei t einer Aufgabe entspricht, wobei d einem Eingabedatensatz (2) entspricht, wobei die Funktionen CT1 und CT2 die Ressourcenwerte unter einer Gewichtung w bestimmen.

8. Verfahren nach Anspruch 6 und 7, **dadurch gekennzeichnet, dass** die Zuteilungseffizienz und die Aufgabeneffizienz derart durch die Steuereinheit (10) berechnet werden, dass eine Maximierung der Summe der Zuteilungseffizienz und der Aufgabeneffizienz erreicht wird.

9. Vorrichtung (1) zum Zuteilen von zumindest einem Eingabedatensatz (2),

   in einem modularen Rechnernetzwerk (3), welches wenigstens ein erstes Rechenmodul (4) und ein zweites Rechenmodul (5) aufweist,
   wobei das erste Rechenmodul (4) ein
   denen jeweils ein Ressourcenwert für eine digitale Ressource zugeordnet ist,
   wobei das erste Rechenmodul (4) einer ersten Plattform (7) zugeordnet ist,
   wobei das zweite Rechenmodul (8) einer, von der ersten Plattform (7) verschiedenen, zweiten Plattform (8) zugeordnet ist,
   wobei der Eingabedatensatz (2) eine Ressourcenanfrage mit einem Bedarfswert aufweist,
   wobei eine Steuereinheit (10) dazu ausgestaltet ist:

   • Auf den Eingabedatensatz (2) zuzugreifen und den Eingabedatensatz (2) einzulesen,
   • Den Ressourcenwert von jedem Rechenmodul (4, 5), das Teil des modularen Rechnernetzwerks (3) ist abzurufen, wobei der Ressourcenwert einen verfügbaren Anteil der digitalen Ressource des jeweiligen Rechenmoduls (4, 5) repräsentiert,
   • Den Bedarfswerts mit zumindest einem der abgerufenen Ressourcenwerte zu ermitteln und
   • Den Eingabedatensatz (2) zu einem Rechenmodul (4, 5) in Abhängigkeit des Vergleichs des Bedarfswertes mit dem abgerufenen Ressourcenwert zuzuteilen.

10. Vorrichtung (1) nach Anspruch 9, **dadurch gekennzeichnet, dass** die Steuereinheit (10) dazu eingerichtet und ausgestaltet ist, ein Verfahren nach einem der Ansprüche 1 bis 8 durchzuführen.

Europäisches Patentamt

European Patent Office

Office européen des brevets

# EUROPÄISCHER RECHERCHENBERICHT

**Nummer der Anmeldung**

EP 23 19 3938

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/236169 A1 (VADDI KIRAN KUMAR [IN]) 23. Juli 2020 (2020-07-23) * Absatz [0013] – Absatz [0022] * * Absatz [0047] – Absatz [0049] * ----- | 1-10 | INV. G06F9/50 |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| Den Haag | 6. Februar 2024 | Mühlenbrock, Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 4 517 528 A1**

## ANHANG ZUM EUROPÄISCHEN RECHERCHENBERICHT
## ÜBER DIE EUROPÄISCHE PATENTANMELDUNG NR.

EP 23 19 3938

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-02-2024

| Im Recherchenbericht angeführtes Patentdokument | Datum der Veröffentlichung | Mitglied(er) der Patentfamilie | Datum der Veröffentlichung |
|---|---|---|---|
| US 2020236169 A1 | 23-07-2020 | KEINE | |

Für nähere Einzelheiten zu diesem Anhang : siehe Amtsblatt des Europäischen Patentamts, Nr.12/82